# EUROPEAN PATENT APPLICATION

(11) **EP 4 462 937 A1**
(43) Date of publication of application: **13.11.2024**
(21) Application number: 24175101.5
(22) Date of filing: 10.05.2024
(51) Int. Cl.: H04W 74/0808

(54) **SIDELINK CHANNEL OCCUPANCY TIME SHARING**

(30) Priority: 12.05.2023 US 202363501797 P; 09.05.2024 US 202418659155
(71) Applicant: Apple Inc., Cupertino, CA 95014 (US)
(72) Inventor: NIU, Huaning, Cupertino (US); ZENG, Wei, San Diego (US); ZHANG, Dawei, Saratoga (US); YE, Chunxuan, San Diego (US); BHAMRI, Ankit, Bad Nauheim (DE); HE, Hong, Cupertino (US)
(74) Representative: COPA Copenhagen Patents

(57) **Abstract**

Apparatuses, systems, and methods for sidelink unlicensed band (SL-U) cyclic prefix extension (CPE) starting position as well as identifier (ID) restrictions for channel time occupancy (COT) sharing, including systems, methods, mechanisms for COT sharing for PSFCH multi-channel transmission, CPE starting position determination in SL-U, ID restrictions for SL-U COT sharing, and determination of when to use Type 2A, Type 2B, and/or Type 2C in SL-U COT sharing, e.g., in 5G NR systems and beyond. A UE may initiate channel access in a SL-U via an NR downlink Type A or Type B multi-channel access procedure to perform multi-channel PSFCH transmissions. The UE may secure a COT and when the COT is initiated by PSFCH type 1 channel access, the COT may not be shared with other UEs, the COT may be shared with a corresponding UE, or the COT may be shared with UEs expecting feedback during the COT.

## Description

### FIELD

The invention relates to wireless communications, and more particularly to apparatuses, systems, and methods for sidelink unlicensed band (SL-U) cyclic prefix extension (CPE) starting position as well as identifier (ID) restrictions for channel time occupancy (COT) sharing, e.g., in 5G NR systems and beyond.

### DESCRIPTION OF THE RELATED ART

Wireless communication systems are rapidly growing in usage. In recent years, wireless devices such as smart phones and tablet computers have become increasingly sophisticated. In addition to supporting telephone calls, many mobile devices now provide access to the internet, email, text messaging, and navigation using the global positioning system (GPS) and are capable of operating sophisticated applications that utilize these functionalities. Some examples of wireless communication standards include GSM, UMTS (associated with, for example, WCDMA or TD-SCDMA air interfaces), LTE, LTE Advanced (LTE-A), NR, HSPA, 3GPP2 CDMA2000 (e.g., 1xRTT, 1xEV-DO, HRPD, eHRPD), IEEE 802.11 (WLAN or Wi-Fi), BLUETOOTH^{™}, etc.

The ever-increasing number of features and functionality introduced in wireless communication devices also creates a continuous need for improvement in both wireless communications and in wireless communication devices. In particular, it is important to ensure the accuracy of transmitted and received signals through user equipment (UE) devices, e.g., through wireless devices such as cellular phones, base stations and relay stations used in wireless cellular communications. In addition, increasing the functionality of a UE device can place a significant strain on the battery life of the UE device. Thus, it is very important to also reduce power requirements in UE device designs while allowing the UE device to maintain good transmit and receive abilities for improved communications. Accordingly, improvements in the field are desired.

### SUMMARY

Embodiments relate to wireless communications, and more particularly to apparatuses, systems, and methods for sidelink unlicensed band (SL-U) cyclic prefix extension (CPE) starting position as well as identifier (ID) restrictions for channel time occupancy (COT) sharing, e.g., in 5G NR systems and beyond.

For example, in some embodiments, a UE (e.g., a baseband processor of a UE) may be configured to initiate channel access in a SL-U (e.g., SL-U band and/or SL-U spectrum) via a NR downlink (DL) Type A or NR DL Type B multi-channel access procedure to perform multiple physical sidelink feedback channel (PSFCH) transmissions on multiple channels. In addition, the UE may be configured to secure a COT and when the COT is initiated by PSFCH type 1 channel access, the COT may not be shared with other UEs, the COT may be shared with a corresponding UE, or the COT may be shared with any UE that is expecting feedback during the COT.

As another example, in some embodiments, a UE (e.g., a baseband processor of a UE) may be configured to detect, as part of initiating a COT on a sidelink physical channel, whether there is a reservation for the sidelink physical channel. The sidelink physical channel may include at least one of a physical sidelink control channel (PSCCH) or physical sidelink shared channel (PSSCH). In addition, the UE may be configured to, in response to detecting that there is no reservation for the sidelink physical channel, initiate full bandwidth transmission on the sidelink physical channel and select multiple CPE starting positions to avoid interference. Further, the UE may be configured to, in response to detecting that there is a reservation for the sidelink physical channel, initiate, based on one or more conditions, a partial bandwidth transmission on the sidelink physical channel and select a CPE starting position based on the one or more conditions.

As an additional example, in some embodiments, a UE (e.g., a baseband processor of a UE) may be configured to receive information from a transmitting UE that initiated the COT. The information may be received on a shared RB set. In addition, the UE may be configured to transmit, using a resource within the shared RB set, during the COT.

As a further example, in some embodiments, a UE (e.g., a baseband processor of a UE) may be configured to initiate channel access in the SL-U spectrum. In addition, the UE may be configured to determine whether the UE will have partial bandwidth for transmissions or full bandwidth for transmission during the COT. Further, the UE may be configured to select a channel access type based on the determining.

The techniques described herein may be implemented in and/or used with a number of different types of devices, including but not limited to unmanned aerial vehicles (UAVs), unmanned aerial controllers (UACs), a UTM server, base stations, access points, cellular phones, tablet computers, wearable computing devices, portable media players, and any of various other computing devices.

This Summary is intended to provide a brief overview of some of the subject matter described in this document. Accordingly, it will be appreciated that the above-described features are merely examples and should not be construed to narrow the scope or spirit of the subject matter described herein in any way. Other features, aspects, and advantages of the subject matter described herein will become apparent from the following Detailed Description, Figures, and Claims.

### BRIEF DESCRIPTION OF THE DRAWINGS

A better understanding of the present subject matter can be obtained when the following detailed description of various embodiments is considered in conjunction with the following drawings, in which:
Figure 1 illustrates an example wireless communication system according to some embodiments.
Figure 2 illustrates an example block diagram of a base station, according to some embodiments.
Figure 3 illustrates an example block diagram of a UE, according to some embodiments.
Figure 4 is a block diagram illustrating an example modem or baseband processor, according to some embodiments.
Figure 5 illustrates an example of COT over-sharing.
Figure 6 illustrates a UE providing feedback on a PSFCH both inside and outside of a corresponding COT, according to some embodiments.
Figure 7 illustrates an example of a UE transmitting within a shared RB set, according to some embodiments.
Figure 8 illustrates an example of a default configuration for CCA, according to some embodiments.
Figure 9 illustrates an example of a UE transmitting using a full transmission, according to some embodiments.
Figure 10 illustrates an example of a UE transmitting using a partial bandwidth transmission.
Figure 11 illustrates a block diagram of an example of a method for COT sharing of a PSFCH, according to some embodiments.
Figure 12 illustrates a block diagram of an example of a method for selection a CPE starting position for sidelink physical channel transmissions, according to some embodiments.
Figure 13 illustrates a block diagram of an example of a method for COT sharing for SL-U spectrum operation, according to some embodiments.
Figure 14 illustrates a block diagram of an example of a method for determining channel access type for COT for SL-U spectrum operation, according to some embodiments.

While the features described herein may be susceptible to various modifications and alternative forms, specific embodiments thereof are shown by way of example in the drawings and are herein described in detail. It should be understood, however, that the drawings and detailed description thereto are not intended to be limiting to the particular form disclosed, but on the contrary, the intention is to cover all modifications, equivalents and alternatives falling within the spirit and scope of the subject matter as defined by the appended claims.

### DETAILED DESCRIPTION

### Acronyms

Various acronyms are used throughout the present disclosure. Definitions of the most prominently used acronyms that may appear throughout the present disclosure are provided below:
- **3GPP:** Third Generation Partnership Project
- **UE:** User Equipment
- **RF:** Radio Frequency
- **BS:** Base Station
- **DL:** Downlink
- **UL:** Uplink
- **LTE:** Long Term Evolution
- **NR:** New Radio
- **5GS:** 5G System
- **5GMM:** 5GS Mobility Management
- **5GC/5GCN:** 5G Core Network
- **SIM:** Subscriber Identity Module
- **eSIM:** Embedded Subscriber Identity Module
- **IE:** Information Element
- **CE:** Control Element
- **MAC:** Medium Access Control
- **SSB:** Synchronization Signal Block
- **PDCCH:** Physical Downlink Control Channel
- **PDSCH:** Physical Downlink Shared Channel
- **RRC:** Radio Resource Control

### Terms

The following is a glossary of terms used in this disclosure:
**Memory Medium** - Any of various types of non-transitory memory devices or storage devices. The term "memory medium" is intended to include an installation medium, e.g., a CD-ROM, floppy disks, or tape device; a computer system memory or random-access memory such as DRAM, DDR RAM, SRAM, EDO RAM, Rambus RAM, etc.; a non-volatile memory such as a Flash, magnetic media, e.g., a hard drive, or optical storage; registers, or other similar types of memory elements, etc. The memory medium may include other types of non-transitory memory as well or combinations thereof. In addition, the memory medium may be located in a first computer system in which the programs are executed, or may be located in a second different computer system which connects to the first computer system over a network, such as the Internet. In the latter instance, the second computer system may provide program instructions to the first computer for execution. The term "memory medium" may include two or more memory mediums which may reside in different locations, e.g., in different computer systems that are connected over a network. The memory medium may store program instructions (e.g., embodied as computer programs) that may be executed by one or more processors.
**Carrier Medium** - a memory medium as described above, as well as a physical transmission medium, such as a bus, network, and/or other physical transmission medium that conveys signals such as electrical, electromagnetic, or digital signals.
**Programmable Hardware Element** - includes various hardware devices comprising multiple programmable function blocks connected via a programmable interconnect. Examples include FPGAs (Field Programmable Gate Arrays), PLDs (Programmable Logic Devices), FPOAs (Field Programmable Object Arrays), and CPLDs (Complex PLDs). The programmable function blocks may range from fine grained (combinatorial logic or look up tables) to coarse grained (arithmetic logic units or processor cores). A programmable hardware element may also be referred to as "reconfigurable logic".
**User Equipment (UE) (or "UE Device")** - any of various types of computer systems devices which are mobile or portable and which performs wireless communications. Examples of UE devices include mobile telephones or smart phones (e.g., iPhone^{™}, Android^{™}-based phones), portable gaming devices (e.g., Nintendo DS^{™}, PlayStation Portable^{™}, Gameboy Advance^{™}, iPhone^{™}), laptops, wearable devices (e.g., smart watch, smart glasses), PDAs, portable Internet devices, music players, data storage devices, other handheld devices, unmanned aerial vehicles (UAVs) (e.g., drones), UAV controllers (UACs), and so forth. In general, the term "UE'' or "UE device" can be broadly defined to encompass any electronic, computing, and/or telecommunications device (or combination of devices) which is easily transported by a user and capable of wireless communication.
**Base Station** - The term "Base Station" has the full breadth of its ordinary meaning, and at least includes a wireless communication station installed at a fixed location and used to communicate as part of a wireless telephone system or radio system.
**Processing Element (or Processor)** - refers to various elements or combinations of elements that are capable of performing a function in a device, such as a user equipment or a cellular network device. Processing elements may include, for example: processors and associated memory, portions or circuits of individual processor cores, entire processor cores, processor arrays, circuits such as an ASIC (Application Specific Integrated Circuit), programmable hardware elements such as a field programmable gate array (FPGA), as well any of various combinations of the above.
**Channel** - a medium used to convey information from a sender (transmitter) to a receiver. It should be noted that since characteristics of the term "channel" may differ according to different wireless protocols, the term "channel" as used herein may be considered as being used in a manner that is consistent with the standard of the type of device with reference to which the term is used. In some standards, channel widths may be variable (e.g., depending on device capability, band conditions, etc.). For example, LTE may support scalable channel bandwidths from 1.4 MHz to 20MHz. In contrast, WLAN channels may be 22MHz wide while Bluetooth channels may be 1Mhz wide. Other protocols and standards may include different definitions of channels. Furthermore, some standards may define and use multiple types of channels, e.g., different channels for uplink or downlink and/or different channels for different uses such as data, control information, etc.
**Band** - The term "band" has the full breadth of its ordinary meaning, and at least includes a section of spectrum (e.g., radio frequency spectrum) in which channels are used or set aside for the same purpose.
**Wi-Fi** - The term "Wi-Fi" (or WiFi) has the full breadth of its ordinary meaning, and at least includes a wireless communication network or RAT that is serviced by wireless LAN (WLAN) access points and which provides connectivity through these access points to the Internet. Most modern Wi-Fi networks (or WLAN networks) are based on IEEE 802.11 standards and are marketed under the name "Wi-Fi". A Wi-Fi (WLAN) network is different from a cellular network.
**3GPP Access** - refers to accesses (e.g., radio access technologies) that are specified by 3GPP standards. These accesses include, but are not limited to, GSM/GPRS, LTE, LTE-A, and/or 5GNR. In general, 3GPP access refers to various types of cellular access technologies.
**Non-3GPP Access** - refers any accesses (e.g., radio access technologies) that are not specified by 3GPP standards. These accesses include, but are not limited to, WiMAX, Wi-Fi, WLAN, and/or fixed networks. Non-3GPP accesses may be split into two categories, "trusted" and "untrusted": Trusted non-3GPP accesses can interact directly with an evolved packet core (EPC) and/or a 5G core (5GC) whereas untrusted non-3GPP accesses interwork with the EPC/5GC via a network entity, such as an Evolved Packet Data Gateway and/or a 5G NR gateway. In general, non-3GPP access refers to various types on non-cellular access technologies.
**Automatically** - refers to an action or operation performed by a computer system (e.g., software executed by the computer system) or device (e.g., circuitry, programmable hardware elements, ASICs, etc.), without user input directly specifying or performing the action or operation. Thus, the term "automatically" is in contrast to an operation being manually performed or specified by the user, where the user provides input to directly perform the operation. An automatic procedure may be initiated by input provided by the user, but the subsequent actions that are performed "automatically" are not specified by the user, i.e., are not performed "manually", where the user specifies each action to perform. For example, a user filling out an electronic form by selecting each field and providing input specifying information (e.g., by typing information, selecting check boxes, radio selections, etc.) is filling out the form manually, even though the computer system must update the form in response to the user actions. The form may be automatically filled out by the computer system where the computer system (e.g., software executing on the computer system) analyzes the fields of the form and fills in the form without any user input specifying the answers to the fields. As indicated above, the user may invoke the automatic filling of the form, but is not involved in the actual filling of the form (e.g., the user is not manually specifying answers to fields but rather they are being automatically completed). The present specification provides various examples of operations being automatically performed in response to actions the user has taken.
**Approximately** - refers to a value that is almost correct or exact. For example, approximately may refer to a value that is within 1 to 10 percent of the exact (or desired) value. It should be noted, however, that the actual threshold value (or tolerance) may be application dependent. For example, in some embodiments, "approximately" may mean within 0.1% of some specified or desired value, while in various other embodiments, the threshold may be, for example, 2%, 3%, 5%, and so forth, as desired or as required by the particular application.
**Concurrent** - refers to parallel execution or performance, where tasks, processes, or programs are performed in an at least partially overlapping manner. For example, concurrency may be implemented using "strong" or strict parallelism, where tasks are performed (at least partially) in parallel on respective computational elements, or using "weak parallelism", where the tasks are performed in an interleaved manner, e.g., by time multiplexing of execution threads.

Various components may be described as "configured to" perform a task or tasks. In such contexts, "configured to" is a broad recitation generally meaning "having structure that" performs the task or tasks during operation. As such, the component can be configured to perform the task even when the component is not currently performing that task (e.g., a set of electrical conductors may be configured to electrically connect a module to another module, even when the two modules are not connected). In some contexts, "configured to" may be a broad recitation of structure generally meaning "having circuitry that" performs the task or tasks during operation. As such, the component can be configured to perform the task even when the component is not currently on. In general, the circuitry that forms the structure corresponding to "configured to" may include hardware circuits.

Various components may be described as performing a task or tasks, for convenience in the description. Such descriptions should be interpreted as including the phrase "configured to." Reciting a component that is configured to perform one or more tasks is expressly intended not to invoke 35 U.S.C. § 112(f) interpretation for that component.

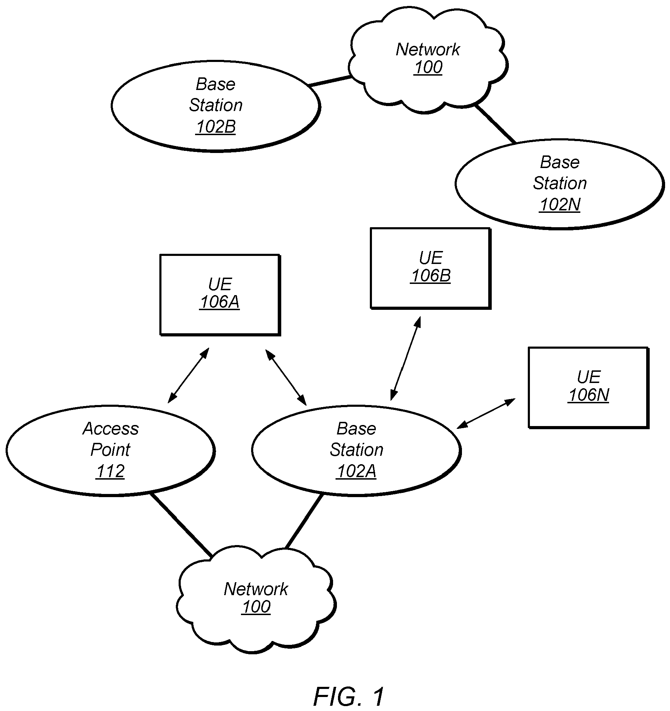

### Figure 1: Communication System

Figure 1 illustrates a simplified example wireless communication system, according to some embodiments. It is noted that the system of Figure 1 is merely one example of a possible system, and that features of this disclosure may be implemented in any of various systems, as desired.

As shown, the example wireless communication system includes a base station 102A which communicates over a transmission medium with one or more user devices 106A, 106B, etc., through 106N. Each of the user devices may be referred to herein as a "user equipment" (UE). Thus, the user devices 106 are referred to as UEs or UE devices.

The base station (BS) 102A may be a base transceiver station (BTS) or cell site (a "cellular base station") and may include hardware that enables wireless communication with the UEs 106A through 106N.

The communication area (or coverage area) of the base station may be referred to as a "cell." The base station 102A and the UEs 106 may be configured to communicate over the transmission medium using any of various radio access technologies (RATs), also referred to as wireless communication technologies, or telecommunication standards, such as LTE, LTE-Advanced (LTE-A), 5G new radio (5G NR), Wi-Fi, etc. Note that if the base station 102A is implemented in the context of LTE, it may alternately be referred to as an 'eNodeB' or `eNB'. Note that if the base station 102A is implemented in the context of 5G NR, it may alternately be referred to as 'gNodeB' or 'gNB'.

As shown, the base station 102A may also be equipped to communicate with a network 100 (e.g., a core network of a cellular service provider, a telecommunication network such as a public switched telephone network (PSTN), and/or the Internet, among various possibilities). Thus, the base station 102A may facilitate communication between the user devices and/or between the user devices and the network 100. In particular, the cellular base station 102A may provide UEs 106 with various telecommunication capabilities, such as voice, SMS and/or data services.

Base station 102A and other similar base stations (such as base stations 102B... 102N) operating according to the same or a different cellular communication standard may thus be provided as a network of cells, which may provide continuous or nearly continuous overlapping service to UEs 106A-N and similar devices over a geographic area via one or more cellular communication standards.

Thus, while base station 102A may act as a "serving cell" for UEs 106A-N as illustrated in Figure 1, each UE 106 may also be capable of receiving signals from (and possibly within communication range of) one or more other cells (which might be provided by base stations 102B-N and/or any other base stations), which may be referred to as "neighboring cells". Such cells may also be capable of facilitating communication between user devices and/or between user devices and the network 100. Such cells may include "macro" cells, "micro" cells, "pico" cells, and/or cells which provide any of various other granularities of service area size. For example, base stations 102A-B illustrated in Figure 1 might be macro cells, while base station 102N might be a micro cell. Other configurations are also possible.

In some embodiments, base station 102A may be a next generation base station, e.g., a 5G New Radio (5G NR) base station, or "gNB". In some embodiments, a gNB may be connected to a legacy evolved packet core (EPC) network and/or to a NR core (NRC) network. In addition, a gNB cell may include one or more transition and reception points (TRPs). In addition, a UE capable of operating according to 5G NR may be connected to one or more TRPs within one or more gNBs.

In addition, the UE 106 may be in communication with an access point 112, e.g., using a wireless networking (e.g., Wi-Fi) and/or peer-to-peer wireless communication protocol (e.g., Bluetooth, Wi-Fi peer-to-peer, etc.). The access point 112 may provide a connection to the network 100.

Note that a UE 106 may be capable of communicating using multiple wireless communication standards. For example, the UE 106 may be configured to communicate using a wireless networking (e.g., Wi-Fi) and/or peer-to-peer wireless communication protocol (e.g., Bluetooth, Wi-Fi peer-to-peer, etc.) in addition to at least one cellular communication protocol (e.g., LTE, LTE-A, 5G NR, etc.). The UE 106 may also or alternatively be configured to communicate using one or more global navigational satellite systems (GNSS, e.g., GPS or GLONASS), one or more mobile television broadcasting standards (e.g., ATSC-M/H or DVB-H), and/or any other wireless communication protocol, if desired. Other combinations of wireless communication standards (including more than two wireless communication standards) are also possible.

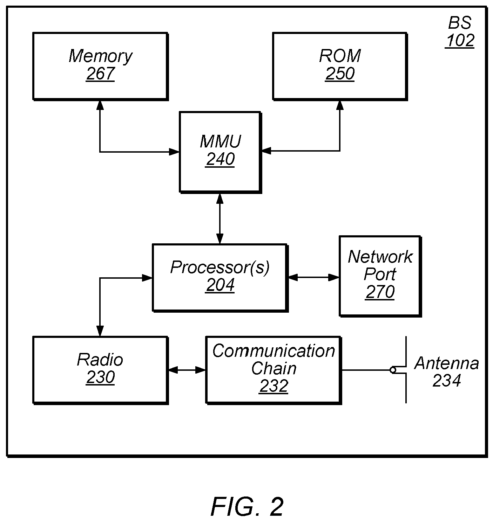

### Figure 2: Block Diagram of a Base Station

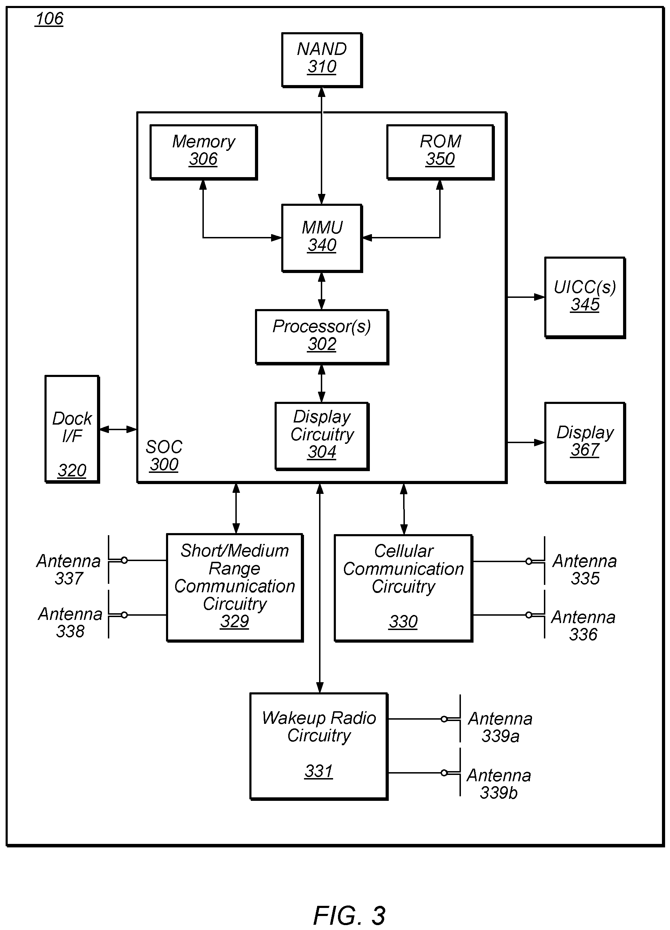

Figure 2 illustrates an example block diagram of a base station 102, according to some embodiments. It is noted that the base station of Figure 3 is merely one example of a possible base station. As shown, the base station 102 may include processor(s) 204 which may execute program instructions for the base station 102. The processor(s) 204 may also be coupled to memory management unit (MMU) 240, which may be configured to receive addresses from the processor(s) 204 and translate those addresses to locations in memory (e.g., memory 260 and read only memory (ROM) 250) or to other circuits or devices.

The base station 102 may include at least one network port 270. The network port 270 may be configured to couple to a telephone network and provide a plurality of devices, such as UE devices 106, access to the telephone network as described above in Figures 1 and 2.

The network port 270 (or an additional network port) may also or alternatively be configured to couple to a cellular network, e.g., a core network of a cellular service provider. The core network may provide mobility related services and/or other services to a plurality of devices, such as UE devices 106. In some cases, the network port 270 may couple to a telephone network via the core network, and/or the core network may provide a telephone network (e.g., among other UE devices serviced by the cellular service provider).

In some embodiments, base station 102 may be a next generation base station, e.g., a 5G New Radio (5G NR) base station, or "gNB". In such embodiments, base station 102 may be connected to a legacy evolved packet core (EPC) network and/or to a NR core (NRC) network. In addition, base station 102 may be considered a 5G NR cell and may include one or more transition and reception points (TRPs). In addition, a UE capable of operating according to 5G NR may be connected to one or more TRPs within one or more gNBs.

The base station 102 may include at least one antenna 234, and possibly multiple antennas. The at least one antenna 234 may be configured to operate as a wireless transceiver and may be further configured to communicate with UE devices 106 via radio 230. The antenna 234 communicates with the radio 230 via communication chain 232. Communication chain 232 may be a receive chain, a transmit chain or both. The radio 230 may be configured to communicate via various wireless communication standards, including, but not limited to, 5G NR, LTE, LTE-A, Wi-Fi, etc.

The base station 102 may be configured to communicate wirelessly using multiple wireless communication standards. In some instances, the base station 102 may include multiple radios, which may enable the base station 102 to communicate according to multiple wireless communication technologies. For example, as one possibility, the base station 102 may include an LTE radio for performing communication according to LTE as well as a 5G NR radio for performing communication according to 5GNR. In such a case, the base station 102 may be capable of operating as both an LTE base station and a 5G NR base station. As another possibility, the base station 102 may include a multi-mode radio which is capable of performing communications according to any of multiple wireless communication technologies (e.g., 5G NR and Wi-Fi, LTE and Wi-Fi, etc.).

As described further subsequently herein, the BS 102 may include hardware and software components for implementing or supporting implementation of features described herein. The processor 204 of the base station 102 may be configured to implement or support implementation of part or all of the methods described herein, e.g., by executing program instructions stored on a memory medium (e.g., a non-transitory computer-readable memory medium). Alternatively, the processor 204 may be configured as a programmable hardware element, such as an FPGA (Field Programmable Gate Array), or as an ASIC (Application Specific Integrated Circuit), or a combination thereof. Alternatively (or in addition) the processor 204 of the BS 102, in conjunction with one or more of the other components 230, 232, 234, 240, 250, 260, 270 may be configured to implement or support implementation of part or all of the features described herein.

In addition, as described herein, processor(s) 204 may be comprised of one or more processing elements. In other words, one or more processing elements may be included in processor(s) 204. Thus, processor(s) 204 may include one or more integrated circuits (ICs) that are configured to perform the functions of processor(s) 204. In addition, each integrated circuit may include circuitry (e.g., first circuitry, second circuitry, etc.) configured to perform the functions of processor(s) 204.

Further, as described herein, radio 230 may be comprised of one or more processing elements. In other words, one or more processing elements may be included in radio 230. Thus, radio 230 may include one or more integrated circuits (ICs) that are configured to perform the functions of radio 230. In addition, each integrated circuit may include circuitry (e.g., first circuitry, second circuitry, etc.) configured to perform the functions of radio 230.

### Figure 3: Block Diagram of a LTE

Figure 3 illustrates an example simplified block diagram of a communication device 106, according to some embodiments. It is noted that the block diagram of the communication device of Figure 3 is only one example of a possible communication device. According to embodiments, communication device 106 may be a user equipment (UE) device, a mobile device or mobile station, a wireless device or wireless station, a desktop computer or computing device, a mobile computing device (e.g., a laptop, notebook, or portable computing device), a tablet, an unmanned aerial vehicle (UAV), a UAV controller (UAC) and/or a combination of devices, among other devices. As shown, the communication device 106 may include a set of components 300 configured to perform core functions. For example, this set of components may be implemented as a system on chip (SOC), which may include portions for various purposes. Alternatively, this set of components 300 may be implemented as separate components or groups of components for the various purposes. The set of components 300 may be coupled (e.g., communicatively; directly or indirectly) to various other circuits of the communication device 106.

For example, the communication device 106 may include various types of memory (e.g., including NAND flash 310), an input/output interface such as connector I/F 320 (e.g., for connecting to a computer system; dock; charging station; input devices, such as a microphone, camera, keyboard; output devices, such as speakers; etc.), the display 360, which may be integrated with or external to the communication device 106, and cellular communication circuitry 330 such as for 5G NR, LTE, GSM, etc., short to medium range wireless communication circuitry 329 (e.g., Bluetooth^{™} and WLAN circuitry), and wakeup radio circuitry 331. In some embodiments, communication device 106 may include wired communication circuitry (not shown), such as a network interface card, e.g., for Ethernet.

The cellular communication circuitry 330 may couple (e.g., communicatively; directly or indirectly) to one or more antennas, such as antennas 335 and 336 as shown. The short to medium range wireless communication circuitry 329 may also couple (e.g., communicatively; directly or indirectly) to one or more antennas, such as antennas 337 and 338 as shown. Alternatively, the short to medium range wireless communication circuitry 329 may couple (e.g., communicatively; directly or indirectly) to the antennas 335 and 336 in addition to, or instead of, coupling (e.g., communicatively; directly or indirectly) to the antennas 337 and 338. The wakeup radio circuitry 331may also couple (e.g., communicatively; directly or indirectly) to one or more antennas, such as antennas 339a and 339b as shown. Alternatively, the wakeup radio circuitry 331may couple (e.g., communicatively; directly or indirectly) to the antennas 335 and 336 in addition to, or instead of, coupling (e.g., communicatively; directly or indirectly) to the antennas 339a and 339b. The short to medium range wireless communication circuitry 329 and/or cellular communication circuitry 330 may include multiple receive chains and/or multiple transmit chains for receiving and/or transmitting multiple spatial streams, such as in a multiple-input multiple output (MIMO) configuration. The wakeup radio circuitry 331 may include a wakeup receiver, e.g., wakeup radio circuitry 331 may be a wakeup receiver. In some instances, wakeup radio circuitry 331 may be a low power and/or ultra-low power wakeup receiver. In some instances, wakeup radio circuitry may only be powered/active when cellular communication circuitry 330 and/or the short to medium range wireless communication circuitry 329 are in a sleep/no power/inactive state. In some instances, wakeup radio circuitry 331 may monitor (e.g., periodically) a specific frequency/channel for a wakeup signal. Receipt of the wakeup signal may trigger the wakeup radio circuitry 331 to notify (e.g., directly and/or indirectly) cellular communication circuitry 330 to enter a powered/active state.

In some embodiments, as further described below, cellular communication circuitry 330 may include dedicated receive chains (including and/or coupled to, e.g., communicatively; directly or indirectly. dedicated processors and/or radios) for multiple RATs (e.g., a first receive chain for LTE and a second receive chain for 5G NR). In addition, in some embodiments, cellular communication circuitry 330 may include a single transmit chain that may be switched between radios dedicated to specific RATs. For example, a first radio may be dedicated to a first RAT, e.g., LTE, and may be in communication with a dedicated receive chain and a transmit chain shared with an additional radio, e.g., a second radio that may be dedicated to a second RAT, e.g., 5G NR, and may be in communication with a dedicated receive chain and the shared transmit chain.

The communication device 106 may also include and/or be configured for use with one or more user interface elements. The user interface elements may include any of various elements, such as display 360 (which may be a touchscreen display), a keyboard (which may be a discrete keyboard or may be implemented as part of a touchscreen display), a mouse, a microphone and/or speakers, one or more cameras, one or more buttons, and/or any of various other elements capable of providing information to a user and/or receiving or interpreting user input.

The communication device 106 may further include one or more smart cards 345 that include SIM (Subscriber Identity Module) functionality, such as one or more UICC(s) (Universal Integrated Circuit Card(s)) cards 345. Note that the term "SIM" or "SIM entity" is intended to include any of various types of SIM implementations or SIM functionality, such as the one or more UICC(s) cards 345, one or more eUICCs, one or more eSIMs, either removable or embedded, etc. In some embodiments, the UE 106 may include at least two SIMs. Each SIM may execute one or more SIM applications and/or otherwise implement SIM functionality. Thus, each SIM may be a single smart card that may be embedded, e.g., may be soldered onto a circuit board in the UE 106, or each SIM 310 may be implemented as a removable smart card. Thus, the SIM(s) may be one or more removable smart cards (such as UICC cards, which are sometimes referred to as "SIM cards"), and/or the SIMs 310 may be one or more embedded cards (such as embedded UICCs (eUICCs), which are sometimes referred to as "eSIMs" or "eSIM cards").

As shown, the SOC 300 may include processor(s) 302, which may execute program instructions for the communication device 106 and display circuitry 304, which may perform graphics processing and provide display signals to the display 360. The processor(s) 302 may also be coupled to memory management unit (MMU) 340, which may be configured to receive addresses from the processor(s) 302 and translate those addresses to locations in memory (e.g., memory 306, read only memory (ROM) 350, NAND flash memory 310) and/or to other circuits or devices, such as the display circuitry 304, short to medium range wireless communication circuitry 329, cellular communication circuitry 330, connector I/F 320, and/or display 360. The MMU 340 may be configured to perform memory protection and page table translation or set up. In some embodiments, the MMU 340 may be included as a portion of the processor(s) 302.

As noted above, the communication device 106 may be configured to communicate using wireless and/or wired communication circuitry. The communication device 106 may be configured to perform methods for sidelink unlicensed band (SL-U) cyclic prefix extension (CPE) starting position as well as identifier (ID) restrictions for channel time occupancy (COT) sharing, e.g., in 5G NR systems and beyond, as further described herein.

As described herein, the communication device 106 may include hardware and software components for implementing the above features for a communication device 106 to communicate a scheduling profile for power savings to a network. The processor 302 of the communication device 106 may be configured to implement part or all of the features described herein, e.g., by executing program instructions stored on a memory medium (e.g., a non-transitory computer-readable memory medium). Alternatively (or in addition), processor 302 may be configured as a programmable hardware element, such as an FPGA (Field Programmable Gate Array), or as an ASIC (Application Specific Integrated Circuit). Alternatively (or in addition) the processor 302 of the communication device 106, in conjunction with one or more of the other components 300, 304, 306, 310, 320, 329, 330, 340, 345, 350, 360 may be configured to implement part or all of the features described herein.

In addition, as described herein, processor 302 may include one or more processing elements. Thus, processor 302 may include one or more integrated circuits (ICs) that are configured to perform the functions of processor 302. In addition, each integrated circuit may include circuitry (e.g., first circuitry, second circuitry, etc.) configured to perform the functions of processor(s) 302.

Further, as described herein, cellular communication circuitry 330 and short to medium range wireless communication circuitry 329 may each include one or more processing elements. In other words, one or more processing elements may be included in cellular communication circuitry 330 and, similarly, one or more processing elements may be included in short to medium range wireless communication circuitry 329. Thus, cellular communication circuitry 330 may include one or more integrated circuits (ICs) that are configured to perform the functions of cellular communication circuitry 330. In addition, each integrated circuit may include circuitry (e.g., first circuitry, second circuitry, etc.) configured to perform the functions of cellular communication circuitry 330. Similarly, the short to medium range wireless communication circuitry 329 may include one or more ICs that are configured to perform the functions of short to medium range wireless communication circuitry 329. In addition, each integrated circuit may include circuitry (e.g., first circuitry, second circuitry, etc.) configured to perform the functions of short to medium range wireless communication circuitry 329.

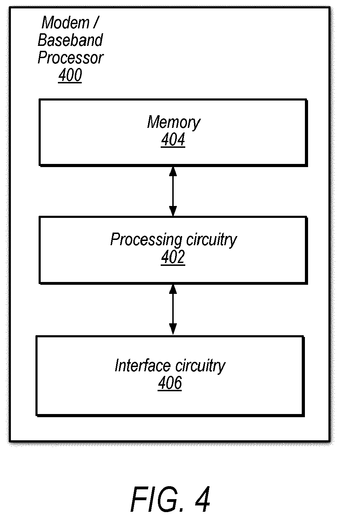

### Figure 4 - Block Diagram of a Modem or Baseband Processor

Figure 4 illustrates an example block diagram of a modem 400, which may also be referred to as baseband processor 400, according to some embodiments. The modem 400 may provide signal processing functionality for one or more wireless communication technologies, such as Wi-Fi, Bluetooth, and/or a cellular (e.g., 3GPP) communication technology. Thus, as one possibility, modem 400 may represent a Wi-Fi modem; for example, the modem 400 illustrated in Figure 4 may represent one possible example of Wi-Fi modem 232 illustrated in Figure 2. As another possibility, modem 400 may represent a cellular modem or cellular baseband processor; for example, the modem 400 illustrated in Figure 4 may represent one possible example of cellular modem 234 illustrated in Figure 2. As a still further possibility, modem 400 may represent a Bluetooth modem; for example, the modem 400 illustrated in Figure 4 may represent one possible example of Wi-Fi modem 236 illustrated in Figure 2. In some embodiments, the modem 400 could implement functionality for supporting communication according to multiple wireless communication technologies. At least in some embodiments, the modem 400 may run a real-time operating system, e.g., for facilitating performance of timing-dependent wireless communication functionality.

The modem 400 may include processing circuitry 402, which could include one or more processor cores, ASICs, programmable hardware elements, digital signal processors, and/or other processing elements. The processing circuitry may be capable of preparing baseband signals for up-conversion and transmission by radio circuitry of a wireless device, and/or for processing baseband signals received and down-converted by radio circuitry of a wireless device. Such processing could include signal modulation, encoding, decoding, etc., among various possible functions. The processing circuitry may also or alternatively be capable of performing functionality for one or more baseband and/or other layers/sublayers of a protocol stack for the wireless communication technology (or technologies) implemented by the modem 400, such as physical layer (PHY) functionality, media access control (MAC) functionality, logical link control (LLC) functionality, radio resource control (RRC) functionality, radio link control (RLC) functionality, etc. In some embodiments, the modem 400 may itself include at least some radio circuitry (e.g., for performing the conversion of input baseband signals to radio frequency signals and/or of input radio frequency signals to baseband signals). Alternatively, or in addition, some or all such functions may be performed by separate radio/transceiver components of the wireless device.

The modem 400 may also include memory 404, which may include a non-transitory computer-readable memory medium. The memory 404 can include program instructions for performing signal processing and/or any of various possible general processing functions. The processing circuitry 402 may be capable of executing the program instructions stored in the memory 404. The memory 404 can also store data generated and/or used during processing performed by the processing circuitry 402.

As shown, the modem 400 may further include interface circuitry, e.g., for communicating with other components of a wireless device (such as STA 106 or AP 104 illustrated in Figures 1-3), such as an application processor, radio / transceiver circuitry, and/or any of various other components. Such interfaces may be implemented in any of various ways; for example, as one possibility, the modem 400 can have a direct interface with transceiver circuitry of a wireless device, and may have an additional indirect interface with an application processor and/or other components of the wireless device by way of a system bus. Other configurations are also possible.

At least according to some embodiments, the hardware and software components of the modem 400 may be configured to implement or support implementation of features described herein, such as performing methods for sidelink unlicensed band (SL-U) cyclic prefix extension (CPE) starting position as well as identifier (ID) restrictions for channel time occupancy (COT) sharing, e.g., in 5G NR systems and beyond, among various other possible features. For example, the processing circuitry 402 of the modem 400 may be configured to implement, or support implementation of, part or all of the methods described herein, e.g., by executing program instructions stored on memory (e.g., non-transitory computer-readable memory medium) 404 and/or using dedicated hardware components.

### SL-U CPE Starting Position and ID Restriction for COT Sharing

Currently, it has been agreed that for dynamic channel access mode with multi-channel access in sidelink unlicensed (SL-U) operation, both NR unlicensed (NR-U) downlink Type A (e.g., where a device conducts individual backoff instance on a per carrier basis before accessing the carrier) and Type B (e.g., where a device conducts backoff instance on a randomly selected carrier or resource block (RB) set and, when successful, performs a type 2 channel access on other carriers/RB sets so the device can access a group of channels simultaneously) multi-channel access procedures are supported for multiple physical sidelink feedback channel (PSFCH) transmissions on multiple channels. However, various issues have been left for further study including whether such a mechanism can initiate a shared channel occupancy time (COT) and/or whether there is any particular handling needed for transmission in a shared COT on one or more of the channels.

Further, when multiple cyclic prefix extension (CPE) starting candidate positions are (pre-)configured for physical sidelink control channel (PSCCH)/physical sidelink shared channel (PSSCH) transmission for the case of initiating a COT, for partial resource block (RB) set resource allocation, a UE may select a CPE starting position according to one of various criteria that may be down-selected base on reservation information. The various criteria may include a (pre-) configured default CPE starting position and a highest priority among detected and transmitted reservations (note that an exact condition and how to use reservation information needs to be decided). Other criteria that have been left for future study include whether such behavior should be allowed for full RB set resource allocation, whether the use of reservation information may be condition on existence of other technologies (e.g., such as NR-U), and/or other conditions/criteria including comparison of an energy detection threshold (EDT) and measured energy associated with an existing reservation. In addition, when multiple CPE starting candidate positions are (pre-)configured for PSCCH/ PSSCH transmission for the case of initiating a COT, for full RB set resource allocation, a CPE starting position is randomly selected among the one or multiple CPE starting candidate positions (pre-)configured per priority of the PSCCH/PSSCH transmission. However, left for future study is whether such behavior should be allowed for partial RB set resource allocation (note than an exact condition and whether/how to use reservation information needs to be decided), whether the UE uses only the selected CPE starting position or a later CPE starting position(s) than the selected one (e.g., if failed or not finished) could be also used. and whether the use of reservation information is conditioned on the existence of other technologies (e.g., such as NR-U). In addition, left for future study is whether any of these behaviors apply only to mode 2 operation or can include mode 1 operation as well. Note that in addition, in sidelink, a resource reservation can be sent for periodic transmission (e.g., where an initial transmission resource can be reserved) and for hybrid automatic repeat request (HARQ) transmission (e.g., where an initial transmission can reserve resource for a HARQ retransmission if needed), however there is no dedicated reservation signal transmission (e.g., such as for bursty transmission in which an initial transmission cannot be reserved).

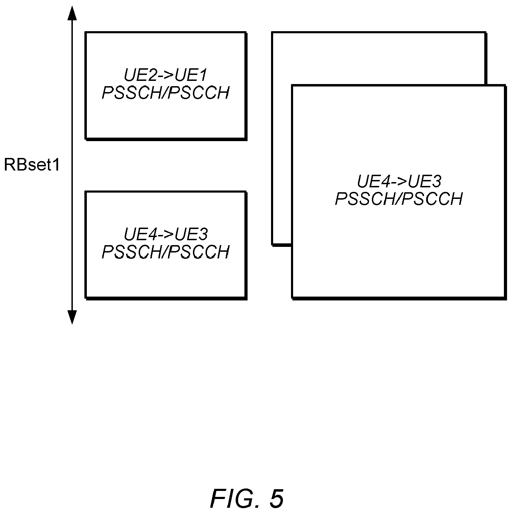

Additionally, it has been agreed that a responding UE over a shared COT can be a receiving UE (e.g., which is a target of a PSCCH/PSSCH transmission of a COT initiator) or a UE identified by an ID. Note that, in the case of unicast from the COT initiator, the responding UE can transmit within the same COT when the source and destination IDs contained in the COT initiator's sidelink control information (SCI) match to the corresponding destination and source IDs relating to the same unicast at the receiving UE. Note further, that in the case of groupcast and broadcast, when the destination ID contained in the COT initiator's SCI match to a destination ID known at the receiving UE, the responding UE can transmit within the same COT. Further, a UE identified by an ID can transmit in the same COT as the COT initiator if additional IDs are supported in the COT sharing information (e.g., in addition to the source and destination IDs of the PSCCH/PSSCH transmission) and when the additional IDs are included in the COT sharing information from the COT initiator. However, left for future study is limitations on what additional IDs may be included as well as how the additional IDs may be indicated. Currently, for SL-U COT sharing, if a COT is initialized with a partial RB transmission, multiple initiating UEs can be an initiating UE and each may share additional IDs which can lead to over-sharing the COT with increased conflicts, e.g., as illustrated by Figure 5.

In addition, there may be a blocking issue between Type 2A and Type 2B/2C. In particular, for COT sharing, how a sidelink UE determines whether Type 2A, Type 2B, or Type 2C is used is unclear.

Therefore, given the above, the following issues have been identified and improvements are desired. First, for PSFCH multi-channel transmission, the interaction between type 1 clear channel assessment (CCA) and type 2 CCA within a shared COT is unclear. Second, selection of CPE starting position remains unclear. Third, for SL-U COT sharing, when additional IDs can be indicated by a COT initiator remains unclear. Finally, for COT sharing, how a SL UE determines whether type 2A, type 2B or type 2C is used is not clear.

Embodiments described herein provide systems, methods, and mechanisms for sidelink unlicensed band (SL-U) cyclic prefix extension (CPE) starting position as well as identifier (ID) restrictions for channel time occupancy (COT) sharing, including systems, methods, mechanisms for COT sharing for PSFCH multi-channel transmission, CPE starting position determination in SL-U, ID restrictions for SL-U COT sharing, and determination of when to use Type 2A, Type 2B, and/or Type 2C in SL-U COT sharing.

For example, in some instances, for multi-channel access in SL-U, a COT initiated by a PSFCH type 1 channel access may not be shared to an other UE (e.g., for the other UE to transmit during the COT). In such instances, no source ID may be included in the PSFCH. In other instances, for multi-channel access in SL-U, a COT initiated by a PSFCH type 1 channel access may be shared with a corresponding UE (e.g., a UE receiving transmissions from the COT initiator). Note that in such instances, only a UE that is receiving acknowledgement (ACK)/negative acknowledgement (NACK) feedback, or NACK only in case of group cast, may share the COT. Additionally, the UE may know that the PSFCH is not transmitted using a shared COT. Note that a default channel access priority class (CAPC) may be priority 1. Therefore, a sharing UE may only transmit traffic with CAPC priority 1 traffic. In yet other instances, for multi-channel access in SL-U, a COT initiated by a PSFCH type 1 channel access may be shared by all UEs that may be expecting to transmit an ACK/NACK.

As another example, for multi-channel access in SL-U, when a PSFCH transmission within COT is type 2 channel access, outside of the COT may be type 1 channel access, where DL type A and type B can be used. Additionally, a first UE (e.g., UE1) may transmit a PSFCH in different RB sets and some of the RB sets may be a shared COT and some of the RB sets may need type 1 channel access. Thus, in some instances, a first UE (e.g., UE1) may perform a type A1 (e.g., independent random draw) multi-channel access procedure when outside of a COT and independently perform type 2 channel access within the COT, e.g., each RB set within the COT may independently selected based on a random number. In other instances, a first UE (e.g., UE1) may perform a type A2 (e.g., maximum of a random number chosen) multi-channel access procedure when outside of the COT (e.g., a random number may be generated for each RB set and a maximum of the random numbers may be used for all RB sets). In yet other instances, a first UE (e.g., UE1) may perform a type B multi-channel access procedure on one of the RB sets that may be randomly selected from RB sets that are outside of the COT. Further, since type 2A channel access may be required for remaining RB sets to transmit, the same type 2A channel access may be used for both within the COT and outside COT.

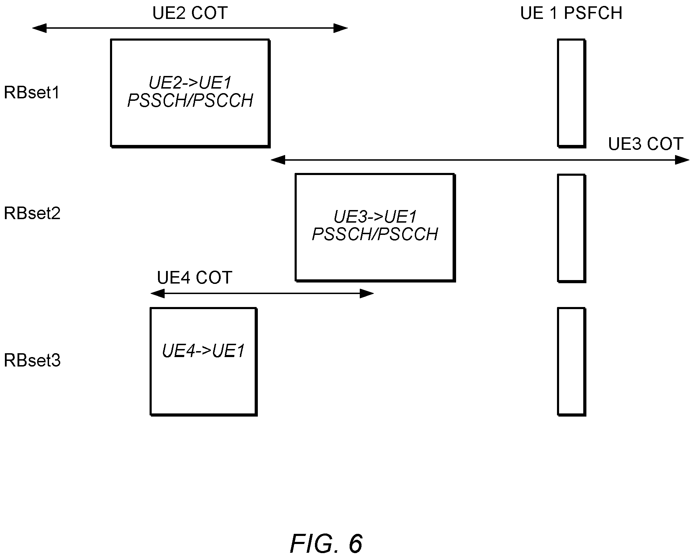

As an example, Figure 6 illustrates a UE providing feedback on a PSFCH both inside and outside of a corresponding COT, according to some embodiments. As shown, a first UE (e.g., UE1), which may be a UE 106, may have sidelink communications, e.g., SL-U communications, with one or more other UEs, e.g., such as UE2, UE3, and UE4. The sidelink communications with UE2 may occur on a first resource block (RB) set (e.g., RBset1), the sidelink communications with UE3 may occur on a second RB set (e.g., RBset2), and the sidelink communications with UE4 may occur on a third RB set (e.g., RBset3). Further, as shown, UE1 may provide feedback, e.g., via a PSFCH, for a transmission received from UE2 on a PSSCH/PSCCH in a COT initiated UE2 (e.g., UE2 COT) outside of the COT initiated by UE2, feedback for a transmission on a PSSCH/PSCCH in a COT initiated by UE3 (e.g., UE3 COT) within the COT initiated by UE3, and feedback for a transmission received from UE4 on a PSSCH/PSCCH in a COT initiated UE4 (e.g., UE4 COT) outside of the COT initiated by UE4. Thus, in some instances, UE1 may perform a type A1 or a type A2 channel access for accessing RBset1 and RBset3 to provide feedback outside of the UE2 COT and the UE4 COT and perform type A2 or type 2 channel access for accessing RBset2 to provide feedback inside of the UE3 COT.

As another example, in some instances, to determine and/or select a CPE starting position, for a full bandwidth transmission, a UE, such as UE 106, may randomly select one CPE out of multiple configured CPE positions. In some instances, if and/or when a clear channel access (CCA) procedure fails for a randomly selected CPE position, the UE may restart/reinitiate a type 1 CCA procedure. In some instances, when the UE does not detect an existing reservation and the UE has not transmitted a reservation, the UE may choose a full bandwidth transmission and may use multiple CPE positions to avoid inference. In some instances, the UE may choose a partial bandwidth transmission (e.g., for a small payload size). In such instances, an initial transmission reservation may have a higher priority than HARQ retransmission. Additionally, if the UE detects that a reservation/transmitted reservation is for a HARQ retransmission, the UE may use one default CPE starting position to allow other UEs to multiplex together Further, if the UE detects that a reservation/transmitted reservation is for an initial transmission, which ever traffic is higher priority may use a larger CPE (e.g., a lower priority transmission can be blocked).

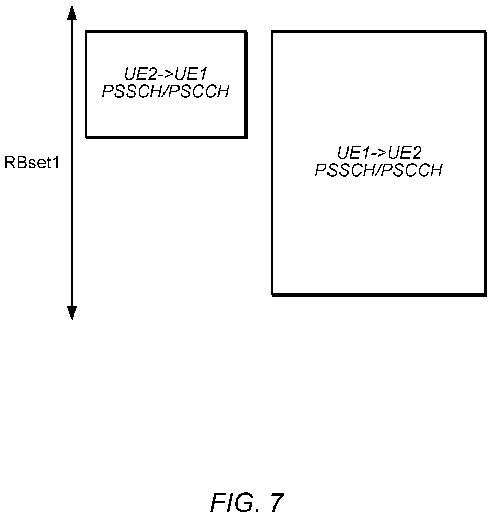

As a further example, in some instances, for SL-U UE COT sharing, a responding UE, such as UE 106, may transmit in any resource within a shared RB set, e.g., as illustrated by Figure 7. As shown, a COT initiator, e.g., UE2, which may be a UE 106, may transmit to a responding UE, e.g., UE1, which may be a UE 106, using a partial bandwidth (e.g., a portion of a resource block (RB) set, such as RBset1). Then, the responding UE may transmit to the COT initiator use some or all of the bandwidth (e.g., some or all of the RB set). In some instances, for SL-U COT sharing, when an additional ID is used, an additional ID may only be included when a COT initiator UE has full bandwidth transmissions. Alternatively, in some instances, for SL-U COT sharing, when an additional ID is used, an additional ID may be included when a COT initiator UE has full bandwidth transmission and the COT initiator UE is expecting transmission from a responding UE (e.g., inter-active traffic).

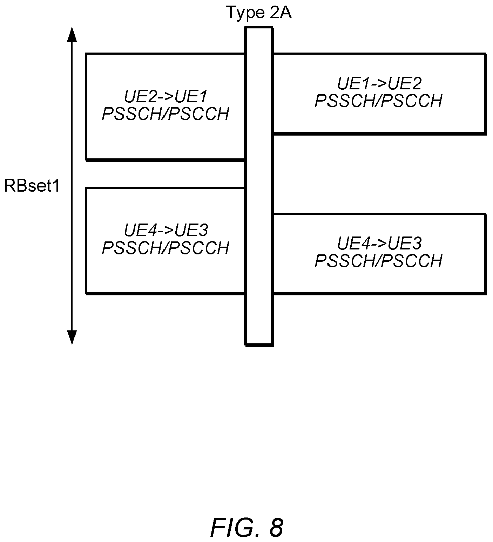

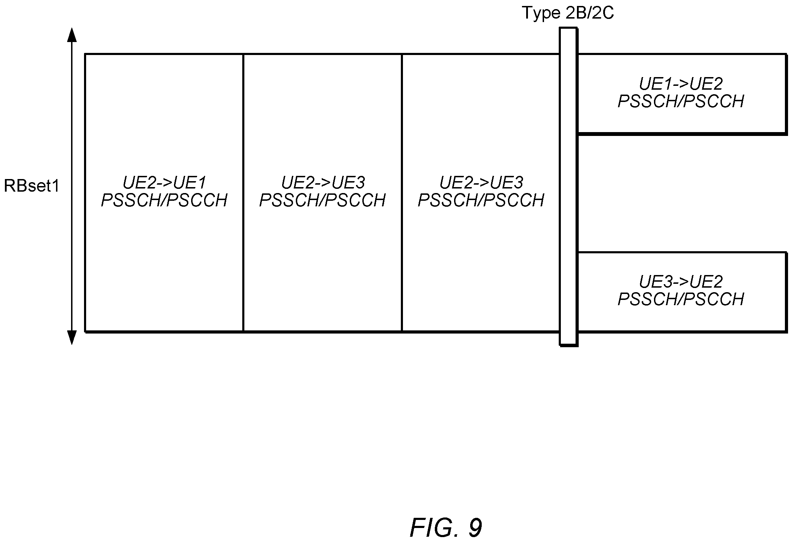

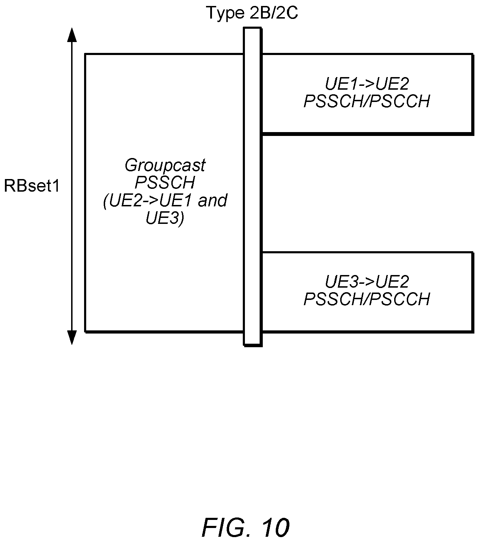

As yet another example, in some instances, for SL-U UE COT sharing, a default configuration for clear channel access (CCA) may be type 2A (e.g., a 25 microsecond listening gap), as illustrated by Figure 8. As shown, UE2 and UE4, which may both be a UE 106, may each transmit on a partial bandwidth (e.g., may each use a portion of resource block set, e.g., such as RBset 1). Thus, after a gap based on a type 2A CCA, UE1 may transmit to UE2 and UE4 may transmit to UE3 again. In some instances, for SL-U UE COT sharing, when a COT initiator UE, such as UE 106, uses a full bandwidth transmission, the initiator COT UE may be configured to type 2B or type 2C CCA, e.g., via sidelink control information (SCI) COT sharing information, e.g., as illustrated by Figure 9. As shown, UE2 may transmit on a full bandwidth (e.g., use all of a resource block set, such as RBset 1) for a transmission to UE1. Further, since UE2 is continuing transmissions, e.g., to UE3, UE2 may not leave a gap between transmissions. However, once UE2 has completed transmission, a gap based on type 2B or type 2C CCA may be used prior to UE1 and UE3 transmitting to UE2. In some instances, for SL-U UE COT sharing, when a CCA type is indicated by an initiator COT UE, such as UE 106, to avoid multiple initiating COT UEs (e.g., for partial bandwidth transmissions) give different type 2A/type 2B/type 2C indications, only an initiator COT UE that is initiating a full bandwidth transmission to dynamically indicate a CCA type. In such instances, initiator COT UEs that are using partial bandwidth transmissions, no dynamic indication of CCA type may be allowed, e.g., a default CCA may always be indicated, e.g., as illustrated by Figure 10. As shown, UE2 may be performing a groupcast to UE1 and UE3. In such instances, after a gap based on type 2B or type 2C CCA, UE1 and UE3 may transmit to UE2. In some instances, for SL-U UE COT sharing, a gap symbol may be included between transmissions when a transmitting UE changes. In some instances, a gap symbol may be a transmission of PSSCH with rate matching, transmission of one symbol of CPE, and/or a transmission of a CPE with a length equal to one symbol (e.g., 16 microseconds).

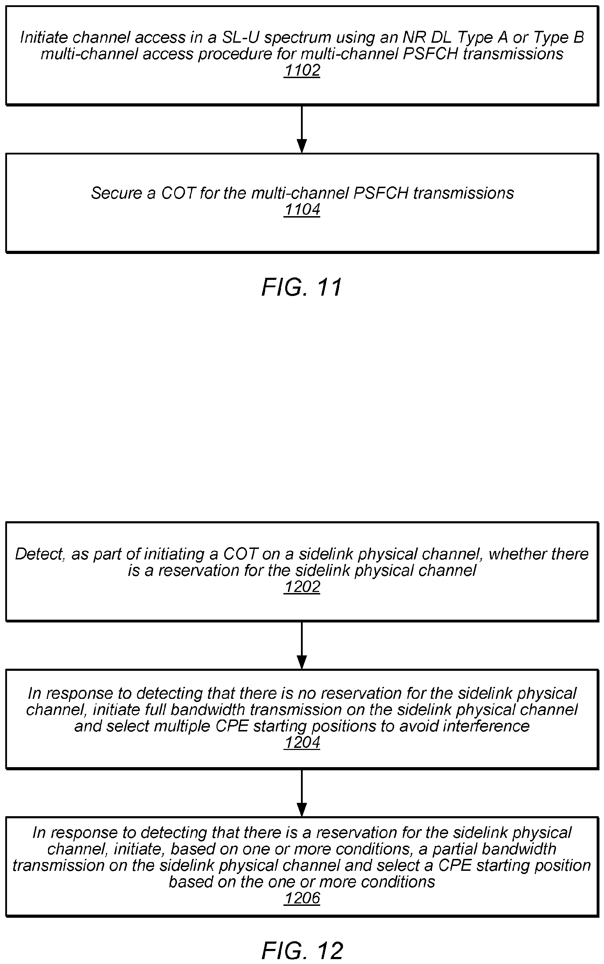

Figure 11 illustrates a block diagram of an example of a method for COT sharing of a PSFCH, according to some embodiments. The method shown in Figure 11 may be used in conjunction with any of the systems, methods, or devices shown in the Figures, among other devices. For example, a processor (such as baseband processor 400 illustrated in and described with respect to Figure 4) and/or other hardware of such a device may be configured to cause the device to perform any combination of the illustrated method elements and/or other method elements. In various embodiments, some of the method elements shown may be performed concurrently, in a different order than shown, or may be omitted. Additional method elements may also be performed as desired. As shown, this method may operate as follows.

At 1102, a UE, such as UE 106, may initiate channel access in a SL-U spectrum via a NR DL Type A or NR DL Type B multi-channel access procedure to perform multiple PSFCH transmissions on multiple channels.

At 1104, the UE may secure a channel occupancy time (COT). In some instances, when the COT is initiated by PSFCH type 1 channel access, the COT may not be shared with other UEs, the COT may be shared with a corresponding UE, or the COT may be shared with any UE that is expecting feedback during the COT. In some instances, when the COT is not shared with other UEs, the UE may not include a source identifier (ID) in the PSFCH. In some instances, when the COT is not shared with other UEs, the UE may not include a destination identifier (ID) in the PSFCH. In some instances, when the COT is shared with the corresponding UE, the corresponding UE may be defined as the UE receiving feedback for unicast transmission between the UE and corresponding UE or the UE receiving negative acknowledgement (NACK) feedback for groupcast transmission. In some instances, the COT may not be a shared COT. In some instances, a default channel access priority class (CAPC) may be 1. In such instances, the corresponding UE may be limited to transmitting traffic with CAPC priority 1 traffic. In some instances, the feedback may include at least one of an acknowledgement (ACK) transmitted on the PSFCH or a negative ACK (NACK) transmitted on the PSFCH.

Figure 12 illustrates a block diagram of an example of a method for selection a CPE starting position for sidelink physical channel transmissions, according to some embodiments. The method shown in Figure 12 may be used in conjunction with any of the systems, methods, or devices shown in the Figures, among other devices. For example, a processor (such as baseband processor 400 illustrated in and described with respect to Figure 4) and/or other hardware of such a device may be configured to cause the device to perform any combination of the illustrated method elements and/or other method elements. In various embodiments, some of the method elements shown may be performed concurrently, in a different order than shown, or may be omitted. Additional method elements may also be performed as desired. As shown, this method may operate as follows.

At 1202, a UE, such as UE 106, may detect, as part of initiating a COT on a sidelink physical channel, whether there is a reservation for the sidelink physical channel. The sidelink physical channel may include at least one of a physical sidelink control channel (PSCCH) or physical sidelink shared channel (PSSCH).

At 1204, the UE may, in response to detecting that there is no reservation for the sidelink physical channel, initiate full bandwidth transmission on the sidelink physical channel and select multiple CPE starting positions to avoid interference. In some instances, to select multiple CPE starting positions to avoid interference, the UE may randomly select a first CPE starting position from the multiple CPE starting position, perform a CCA procedure for the first CPE starting position, and in response to failure of the CCA procedure using the first CPE starting position, randomly select a second CPE starting position from the multiple CPE starting position and perform a CCA procedure for the second CPE starting position. In some instances, to select multiple CPE starting positions to avoid interference, the UE may randomly select a first CPE starting position from the multiple CPE starting position, perform a CCA procedure for the first CPE starting position, and in response to failure of the CCA procedure using the first CPE starting position, triggering a resource re-selection procedure.

At 1206, the UE may, in response to detecting that there is a reservation for the sidelink physical channel, initiate, based on one or more conditions, a partial bandwidth transmission on the sidelink physical channel and select a CPE starting position based on the one or more conditions. In some instances, the one or more conditions may include whether an initial transmission of the reservation has a higher priority than a hybrid automatic repeat request (HARQ) transmission and whether the reservation is for HARQ retransmission. In some instances, when the reservation is for HARQ retransmission, to select the CPE starting position based on the one or more conditions, the UE may select a default CPE starting position. The default CPE starting position may allow other UE transmissions to be multiplexed together with the UE's transmission on the physical sidelink channel. In some instances, when the initial transmission of the reservation has a higher priority than a HARQ transmission, to select the CPE starting position based on the one or more conditions, the UE may select the CPE starting position based on a priority of traffic for the partial bandwidth transmission. In such instances, higher priority traffic may use a larger CPE starting position than lower priority traffic, thereby blocking the lower priority traffic.

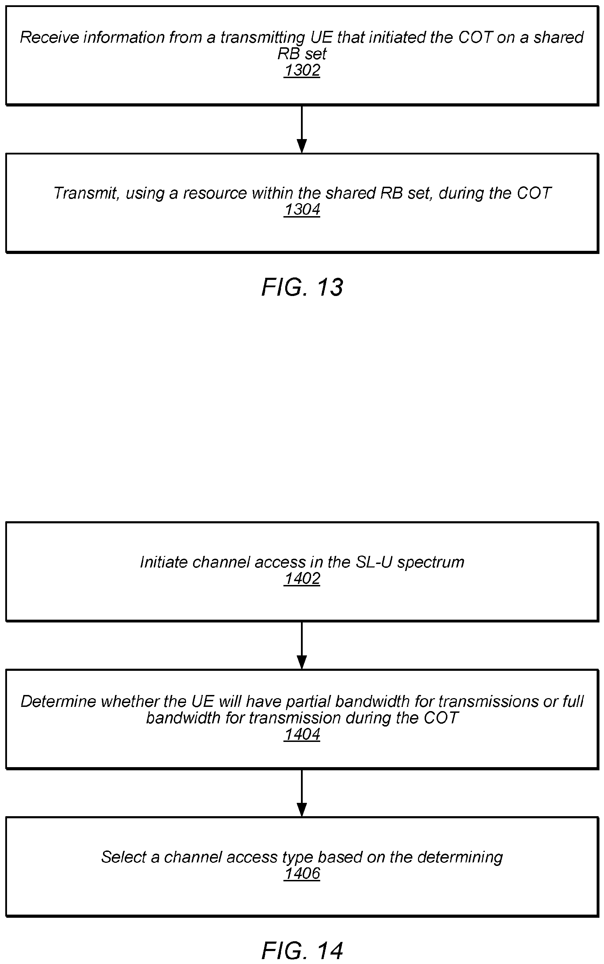

Figure 13 illustrates a block diagram of an example of a method for COT sharing for SL-U spectrum operation, according to some embodiments. The method shown in Figure 13 may be used in conjunction with any of the systems, methods, or devices shown in the Figures, among other devices. For example, a processor (such as baseband processor 400 illustrated in and described with respect to Figure 4) and/or other hardware of such a device may be configured to cause the device to perform any combination of the illustrated method elements and/or other method elements. In various embodiments, some of the method elements shown may be performed concurrently, in a different order than shown, or may be omitted. Additional method elements may also be performed as desired. As shown, this method may operate as follows.

At 1302, a UE, such as UE 106, may receive information from a transmitting UE that initiated the COT. The information may be received on a shared RB set.

At 1304, the UE may transmit, using a resource within the shared RB set, during the COT.

In some instances, the information may be data traffic. In such instances, the UE may be a responding UE during the COT.

In some instances, the transmitting UE may have full bandwidth transmission capability during the COT. In such instances, the transmitting UE may expect inter-active traffic with a responding UE. Further, the information may include an identifier associated with the UE. In such instances, the transmitting may be based on the UE determining receipt of the identifier associated with the UE.

Figure 14 illustrates a block diagram of an example of a method for determining channel access type for COT for SL-U spectrum operation, according to some embodiments. The method shown in Figure 14 may be used in conjunction with any of the systems, methods, or devices shown in the Figures, among other devices. For example, a processor (such as baseband processor 400 illustrated in and described with respect to Figure 4) and/or other hardware of such a device may be configured to cause the device to perform any combination of the illustrated method elements and/or other method elements. In various embodiments, some of the method elements shown may be performed concurrently, in a different order than shown, or may be omitted. Additional method elements may also be performed as desired. As shown, this method may operate as follows.

At 1402, a UE, such as UE 106, may initiate channel access in the SL-U spectrum.

At 1404, the UE may determine whether the UE will have partial bandwidth for transmissions or full bandwidth for transmission during the COT.

At 1406, the UE may select a channel access type based on the determining.

In some instances, when the UE has partial bandwidth for transmissions during the COT, to select a channel access type based on the determining, the UE may select a type 2A CCA procedure. Further, the UE may indicate to UEs sharing the COT that type 2A CCA is to be used during the COT. The type 2A CCA may be a default CCA for SL-U COT sharing.

In some instances, when the UE has full bandwidth for transmissions during the COT, to select a channel access type based on the determining, the UE may select one of a type 2B CCA procedure or a type 2C CCA procedure. Further, the UE may indicate to UEs sharing the COT the selected channel access type.

In some instances, a gap symbol may be included between transmissions from different UEs. In some instances, the gap symbol may be included in a transmission of a physical sidelink shared channel (PSSCH) using rate matching, as a one symbol of a CPE, and/or as one symbol of a cyclic prefix extension (CPE) length.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Embodiments of the present disclosure may be realized in any of various forms. For example, some embodiments may be realized as a computer-implemented method, a computer-readable memory medium, or a computer system. Other embodiments may be realized using one or more custom-designed hardware devices such as ASICs. Still other embodiments may be realized using one or more programmable hardware elements such as FPGAs.

In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a device (e.g., a UE 106) may be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device may be realized in any of various forms.

Any of the methods described herein for operating a user equipment (UE) may be the basis of a corresponding method for operating a base station, by interpreting each message/signal X received by the UE in the downlink as message/signal X transmitted by the base station, and each message/signal Y transmitted in the uplink by the UE as a message/signal Y received by the base station.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method for channel occupancy time, COT, sharing of a physical sidelink feedback channel, PSFCH, comprising:
initiating (1102) channel access in a sidelink unlicensed, SL-U, spectrum via a New Radio, NR, downlink, DL, Type A or NR DL Type B multi-channel access procedure to perform multiple PSFCH transmissions on multiple channels; and
securing (1104) a channel occupancy time, COT, wherein, when the COT is initiated by PSFCH type 1 channel access, the COT is not shared with other user equipment devices, UEs.

2. The method of claim 1,
wherein a source identifier, ID, is not included in the PSFCH.

3. The method of any of claims 1-2,
wherein a destination identifier, ID, is not included in the PSFCH.

4. The method of any of claims 1-3,
wherein, when the COT is initiated by PSFCH type 2 channel access, the method further comprises:
performing a type A1 multi-channel access procedure when outside of the COT.

5. The method of claim 4,
wherein performing the type A1 multi-channel access procedure comprises randomly selecting a resource block set that is outside the COT.

6. The method of any of claims 1-5,
wherein, when the COT is initiated by PSFCH type 2 channel access, the method further comprises:
performing a type A2 multi-channel access procedure when outside of the COT.

7. The method of claim 6,
wherein performing the type A2 multi-channel access procedure comprises:
assigning a random number for each resource block set that is outside the COT; and
selecting a resource block set assigned a maximum random number.

8. The method of any of claims 1-7,
wherein, when the COT is initiated by PSFCH type 2 channel access, the method further comprises:
performing a type B multi-channel access procedure when outside of the COT.

9. The method of claim 8,
wherein the type B multi-channel access procedure is performed on a sub-set of resource block sets that are outside of the COT.

10. The method of claim 9,
wherein the sub-set of resource block sets is randomly selected.

11. The method of any of claims 1-10,
further comprising:
detecting, as part of initiating the COT, whether there is a reservation for a sidelink physical channel associated with the COT;
in response to detecting that there is no reservation for the sidelink physical channel,
initiating full bandwidth transmission on the sidelink physical channel; and
selecting multiple CPE starting positions to avoid interference; and
in response to detecting that there is a reservation for the sidelink physical channel,
initiating, based on one or more conditions, a partial bandwidth transmission on the sidelink physical channel; and
selecting a CPE starting position based on the one or more conditions.

12. The method of claim 11,
wherein the one or more conditions include:
whether an initial transmission of the reservation has a higher priority than a hybrid automatic repeat request, HARQ, transmission; and
whether the reservation is for HARQ retransmission.

13. The method of claim 12,
wherein, when the reservation is for HARQ retransmission, selecting the CPE starting position based on the one or more conditions comprises selecting a default CPE starting position.

14. A baseband processor (400), comprising:
memory (404); and
processing circuitry (402) in communication with the memory (404) and configured to perform a method according to any of claims 1 to 13.

15. A user equipment device, UE, (106) comprising:
at least one antenna (335, 336);
at least one radio (330) in communication with the at least one antenna (335, 336); and
at least one processor (302) in communication with the at least one radio (330), wherein the at least one processor (302) is configured to cause the UE (106) to perform a method according to any of claims 1 to 13.
